# EUROPÄISCHE PATENTANMELDUNG

(11) **EP 1 616 914 A1**
(43) Veröffentlichungstag der Anmeldung: **18.01.2006**
(21) Anmeldenummer: 04405441.9
(22) Anmeldetag: 12.07.2004
(51) Int. Cl.: C09C 1/50

(54) **Russerzeuger**

(71) Anmelder: Matter Engineering AG, 5610 Wohlen (CH)
(72) Erfinder: Matter, Ulrich, 5400 Baden (CH); Mosimann, Thomas, 5616 Meisterschwanden (CH); Kasper, Markus, 8967 Widen (CH); Riner, Michael, 5612 Villmergen (CH)
(74) Vertreter: Frei Patent Attorneys

(57) **Zusammenfassung**

Die Vorrichtung zum Erzeugen von Russpartikeln mit einer reproduzierbaren und variierbaren Grössenverteilung besitzt einen Brennraum (1), zu welchem Brennstoff und Oxidationsgas zuführbar sind und in welchem eine Russpartikel erzeugende, vom Brennstoff und vom Oxidationsgas genährte Flamme gebildet werden kann, und eine Russwegführung (3), die mit dem Brennraum gekoppelt ist indem sie bspw. eine Einmündung aus diesem aufweist, wobei die Russwegführung zusätzlich eine Einmündung für ein Löschgas besitzt. Der Brennraum und die Russwegführung sind Teil eines Innenraums der so von der Umgebung entkoppelbar ist, dass der er mit einem vom Atmosphärendruck verschiedenen Druck beaufschlagbar ist. Der Innenraum ist also ein abgeschlossenes System, bei dem die Gaszuführungen und - wegführungen regelbar sind. Durch Regelung des Drucks kann die Grössenverteilung der Partikel variiert werden.

## Beschreibung

Die Erfindung betrifft eine Vorrichtung zum Erzeugen von Russ mit reproduzierbaren Eigenschaften.

Russerzeuger, welche Russ mit reproduzierbaren Eigenschaften produzieren, werden zur Kalibrierung oder Justierung von Russpartikel-Messgeräten benötigt. Solche Russpartikel-Messgeräte werden beispielsweise zur Messung von Emissionseigenschaften von Verbrennungsmotoren, insbesondere Dieselmotoren verwendet.

In der Schrift EP 1 055 877 wird ein solcher Russerzeuger beschrieben: In einem Brennraum wird mittels einem Brenngas und einem Oxidationsgas eine Russpartikel erzeugende Diffusionsflamme gebildet. Der Brennraum mündet in eine Russwegführleitung, in welcher die Russpartikel weggeführt werden. Die Russwegführleitung besitzt eine weitere Einmündung, in welche Löschgas zuführbar ist, mit welchem Brennvorgänge in der Russwegführleitung erstickt werden. Dadurch wird erreicht, dass Veränderungen der Strömungsverhältnisse in der Russwegführleitung stromabwärts von der weiteren Einmündung keinen nennenswerten Einfluss die Eigenschaften der erzeugten Russpartikel haben.

Dieser Russerzeuger ist durch die gute Reproduzierbarkeit der Eigenschaften von erzeugten Russpartikeln geeignet für die Kalibrierung von verschiedenen Russpartikel-Messgeräten. Er ist jedoch nicht ortsunabhängig in dem Sinn, dass er unter verschiedenen äusseren Bedingungen - bspw. auf verschiedenen Höhen - die gleichen Partikelverteilungen erzeugt. Solches wäre aber wünschenswert. Für manche Anwendungen ist auch notwendig, dass der erzeugte Russ nicht nur reproduzierbare, sondern auch einstellbare Eigenschaften - bspw. bezüglich Grössenverteilung - hat. Zwar lassen sich verschiedene Russpartikel-Grössenverteilungen erwirken, indem bspw. die Zusammensetzung des Brenngases bzw. dessen Verdünnung mit Inertgas oder dessen Fluss variiert oder das Brenngas durch einen flüssigen, fein zerstäubten Brennstoff gebildet wird. Zusätzliche Variationsmöglichkeiten wären aber wünschenswert.

Weiter wäre es auch wünschenswert, einen Russerzeuger zur Verfügung zu haben, welcher auch für andere Anwendungen als die Kalibrierung von Russpartikel-Messgeräten geeignet ist.

Aufgabe der Erfindung ist daher, eine Vorrichtung und ein Verfahren zum Erzeugen von Russpartikeln mit reproduzierbaren Eigenschaften zur Verfügung zu stellen, welches Nachteile von bestehenden Vorrichtungen und Verfahren überwindet und insbesondere die Bildung von Russ mit einstellbaren Eigenschaften ermöglichen sollte und/oder welche für Anwendungen geeignet ist, die über die Kalibrierung von Russpartikel-Messgeräten hinausgeht.

Diese Aufgabe wird gelöst durch die Erfindung, wie sie in den Patentansprüchen definiert ist.

Die Vorrichtung besitzt einen Brennraum, zu welchem Brennstoff und Oxidationsgas zuführbar sind und in welchem eine Russpartikel erzeugende, vom Brennstoff und vom Oxidationsgas genährte Flamme gebildet werden kann, und eine Russwegführung, die mit dem Brennraum gekoppelt ist indem sie bspw. eine Einmündung aus diesem aufweist, wobei die Russwegführung zusätzlich eine Einmündung für ein Löschgas besitzt. Der Brennraum und die Russwegführung sind Teil eines Innenraums der so von der Umgebung entkoppelbar ist, dass der er mit einem vom Atmosphärendruck verschiedenen Druck beaufschlagbar ist.

Der Innenraum kann also ein abgeschlossenes System sein, bei dem die Gaszuführungen und -wegführungen regelbar sind.

Dieses Vorgehen beruht unter anderem auf der gewonnenen Erkenntnis, dass wesentliche Eigenschaften der Russpartikel kritisch von dem im Brennraum herrschenden Druck abhängen. Beispielsweise lässt sich die mittlere Partikelgrösse durch Druckänderungen der Grössenordnung 100 mbar rasch um einen Faktor 1.5 bis 2 variieren. Der Druck im Innenraum kann also zum bei Bedarf systematischen Variieren der Partikel-Grössenverteilung und ggf. anderer Partikeleigenschaften wie der Standardabweichung ihrer Grösse verwendet werden.

Gemäss einer bevorzugten Ausführungsform kann daher der Druck im Innenraum innerhalb eines Bereiches beliebig eingestellt und geregelt werden. Man kann dabei den bei konstant gehaltener Flamme bestehenden Zusammenhang zwischen Druck und Grössenverteilung nutzen, beispielsweise unter Zuhilfenahme einer diesen Zusammenhang quantitativ widerspiegelnden Tabelle oder charakteristischen Funktion (oder dergleichen). So lässt sich eine bestimmte, gewünschte Grössenverteilung einstellen. Diese Art der Steuerung der Russpartikeleigenschaften ist einer Variation mittels veränderter Flammeneigenschaften im Allgemeinen vorzuziehen.

Das System kann bspw. so ausgebildet sein, das der Druck innerhalb eines Bereiches von 200 mbar Unterdruck (im Vergleich zum Atmosphärendruck) bis 500 mbar Überdruck gewählt werden kann. Es sind aber auch grössere Druckdifferenzen möglich.

Der erfindungsgemässe Ansatz mit einem nicht-offenen Ausgang der Russwegführung ermöglicht, dass der Russerzeuger auch neuen Anwendungen zur Verfügung steht. Beispielsweise beim Testen oder Prüfen von Filtern oder Filterelementen muss das Testgas mit Druck beaufschlagt werden, damit es den Filter/das Filterelement durchströmt; ausserdem ist dieser Druck unter Umständen während eines Testzyklus nicht konstant, wenn der Fluss konstant gehalten werden soll und der Filterwiderstand angesichts sich anlagernder Verschmutzungen im Lauf der Zeit zunimmt. Aus diesen Gründen kamen bisherige Russerzeuger für Tests sowie die Qualitätsprüfung von Filtern kaum in Frage. Stattdessen mussten Verbrennungsmotoren als Russerzeuger eingesetzt werden, was aus verschiedenen Gründen nachteilig ist. Der erfindungsgemässe Ansatz ermöglicht, dass ein Russerzeuger mit Flamme verwendet wird, wobei in der Brennkammer ein konstanter, nicht notwendigerweise dem Atmosphärendruck entsprechender Druck herrscht.

Für viele Anwendungen ist es wesentlich, dass bei der Überführung des russhaltigen Gases vom Innenraum nach draussen die Grössenverteilung und weitere Eigenschaften der Russpartikel nicht beeinträchtigt werden. Bei der Überführung über konventionelle Ventile bspw. können grössere Russpartikel durch Impaktion und kleine Russpartikel durch Diffusion verlorengehen - wobei ausserdem die Ventile rasch verschmutzen und unzuverlässig werden. Gemäss einer bevorzugten Ausführungsform ist daher die Vorrichtung mit einer Einrichtung zum Überführen von russhaltigem Gas vom Innenraum nach draussen vorgesehen, welche auf dem folgenden Prinzip beruht: Ein bestimmtes, im Vergleich zum Innenraumvolumen kleines Gasvolumen des Innenraums wird abgeschlossen und in einem geschlossenen Raum nach draussen transportiert, wo es bspw. an eine Wegführleitung abgegeben wird. Anschliessend wird der Vorgang beliebig oft wiederholt. Wesentlich ist, dass dabei nie ein vollständiger Druckausgleich zwischen Innenraum und der Umgebung stattfinden kann, d.h. dass das Gasvolumen vom Innenraum abgeschlossen wird, bevor es mit dem Aussenraum in Kontakt kommt.

Einrichtungen, die dies ermöglichen, sind an sich bereits bekannt. Eine auf bereits realisierter Technologie beruhende Ausführungsform einer solchen Einrichtung ist ein sogenannter Rotationsverdünner (oder Karussellverdünner). Bei einem solchen Verdünner überführt eine mit Kavitäten versehene Scheibe kleine Rohgasvolumina nach draussen (Ein Rotationsverdünner - Typ MD19-2E - ist erhältlich bei der Patentanmelderin, der Matter Engineering AG; entsprechende Informationen findet man in Ch. Hueglin, L. Scherrer und H. Burtscher, J. Aersol Sci. 28, p.1049 (1997) oder direkt beim Hersteller). Als Alternative können auch rotierende Zylinder mit hin- und her bewegenden Kolben oder andere dem obigen Prinzip entsprechende Einrichtungen verwendet werden, beispielsweise mit anstelle einer Drehbewegung linear verschobenen, abgeschlossenen Volumina.

Gemäss einer dazu alternativen bevorzugten Ausführungsform wird das russhaltige Gas mittels einer kritischen Düse (d.h. einer Düse mit Strömung im Überschallbereich) bzw. einem Nadelventil oder mit einer engen,. in der Grösse vorzugsweise einstellbaren Öffnung von der Art einer Irisblende vom Innenraum nach Draussen überführt. Düsen oder Nadelventile sind für Russpartikel im sub-Mikrometer-Bereich geeignet, welche sich in einer Strömung praktisch wie Gasteilchen verhalten, weshalb kaum eine Tendenz zur Impaktion besteht. Aufgrund der grossen Geschwindigkeiten in solchen Düsen/Ventilen wird auch kaum ein signifikanter Teilchenverlust durch Diffusion an eine adsorbierende Wand beobachtet.

Als zusätzliches bevorzugtes Merkmal kann im Innenraum eine Anzündvorrichtung zum Anzünden der Flamme vorgesehen sein. Es hat sich gezeigt, dass eine solche Anzündvorrichtung ausserhalb des Brennraums in der Russwegführung oder in der Brenn- oder Oxidationsgaszuführung angeordnet werden kann. Vor dem Anzünden sorgt die natürlich eintretende Diffusion dafür, dass auch in diesen Fällen in der Umgebung der Anzündvorrichtung eine genügend hohe Konzentration an Brennstoff und Oxidationsgas vorhanden ist, um die Flamme zu zünden. Die Anordnung der Anzündvorrichtung ausserhalb des Brennraums ist sogar besonders bevorzugt, da die Strömungsverhältnisse im Brennraum nach Möglichkeit unbeeinflusst bleiben sollten, um nicht in deren Umgebung turbulente Strömungen zu bewirken, die die Reproduzierbarket der Russerzeugung gefährden könnten.

Im Folgenden werden Ausführungsbeispiele der Erfindung anhand von Zeichnungen detailliert beschrieben. In den Zeichnungen zeigen:
- Fig. 1 eine schematische, geschnittene Seitenansicht eines Ausführungsbeispiels der Erfindung
- Fig. 2 ein Detail aus Fig. 1, wobei mögliche Anordnungen einer Anzündvorrichtung eingezeichnet sind.
- Fig. 3 sehr schematisch eine zum Rotationsverdünner alternative Einrichtung zum Überführen von russhaltigem Gas von der Innenseite nach draussen
- Fig. 4 schematisch eine Filterkontrolleinrichtung
- Fig. 5 ebenfalls schematisch eine Filterprüfeinrichtung
- Fig. 6 eine Kalibrierungsanordnung für einen ,Constant Volume Sampler' CVS.

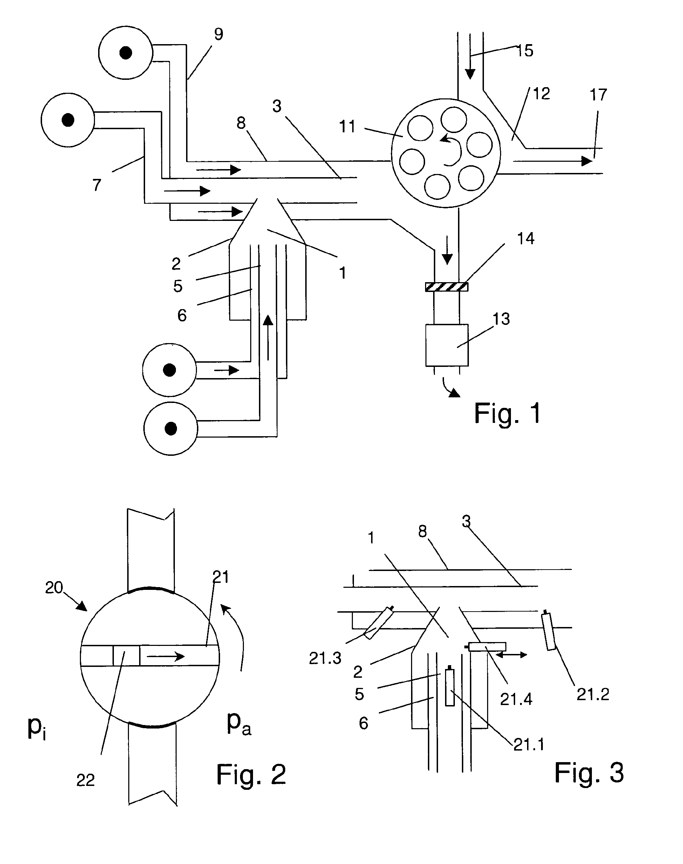

Die in Fig. 1 dargestellte Vorrichtung weist einen Brenner mit einem Brennraum 1 auf, welcher in eine ungefähr senkrecht zum Brennraumgehäuse 2 verlaufende Russwegführleitung 3 mündet. In den Brennraum münden je eine ungefähr vertikal verlaufende Brennstoff-(vorzugsweise Brenngas-)Zuleitung 5 und eine Oxidationsgaszuleitung 6, wobei Brennstoffzuleitung und Oxidationsgaszuleitung bspw. koaxial angeordnet sind. Diese Anordnung mit ungemischt dem Ort der vorgesehenen Flamme zugeführten Brenn- und Oxidationsgasen wird Diffusionsflammen verwendet, bei denen sich Brenn- und Oxidationsgase erst in der Flamme durch Diffusion vermischen. Die Erfindung ist ebensogut geeignet für andere Flammentypen, bspw. vorgemischte Flammen, denen ein bereits gemischtes Brennstoff-/Oxidationsgasgemisch zugeführt wird.

In die Russwegführleitung 3 mündet auch eine Löschgaszuleitung 7. Als Löschgas wird bspw. ein chemisch inertes Gas wie Stickstoff oder ein Edelgas verwendet. Auch die Verwendung von Luft ist möglich, da aufgrund der hohen Aktivierungsenergie von Kohlenstoffverbindungen Brenn- oder Umwandlungsprozesse schon allein aufgrund der Kühlwirkung des Löschgases unterbunden werden.. Die Russwegführleitung 3 hat ein offenes Rohrende und verläuft koaxial zu einem sie umgebenden Mantelrohr 8, in welches eine Verdünnungsgas-Zuleitung 9 mündet. Der Brenner ist in dieser Ausführungsform insgesamt ähnlich dem in der Schrift EP 1 055 877 A, insbesondere in Spalte 5, Zeile 27-Spalte 9, Zeile 44 beschriebenen Brenner. Bezüglich des Aufbaus und Funktionsprinzip des Brenners sowie bezüglich der verwendbaren Brennstoffe, Oxidationsgase, Löschgase und diesen beizumischender Gase und Verdünnungsgase wird hier ausdrücklich auf diese Druckschrift verwiesen, wobei bei der hier beschriebenen Vorrichtung die Brenneraustrittsöffnung durch andere, im folgenden beschriebene Einrichtungen ersetzt ist.

In Strömungsrichtung unterhalb des offenen Endes der Russwegführleitung 3 ist entlang der oder anschliessend an die durch die Fortsetzung des Mantelrohrs 8 (die Distanzen in der Figur sind nicht massstäblich dargestellt) ein in der Figur nur sehr schematisch gezeichneter Rotationsverdünner 11 angeordnet. Mit diesem werden kleine Volumina des in der Wegführleitung vorhandenen russhaltigen Gases von dieser in eine Messleitung 12 transferiert. Die überführten Volumina werden dabei pneumatisch von der Wegführleitung entkoppelt. Die Messleitung kann optional zusätzlich zum transferierten russhaltigen Gas mit verdünnendem Trägergas gespeist werden; der entsprechende Gasfluss wird durch einen Pfeil 15 angedeutet dargestellt. Anschliessend an die Messleitung 12 bzw. den Ausgang 17 der Vorrichtung können Mess- oder Testanordnungen angeordnet sein, wie das weiter unten noch erläutert werden wird.

Nicht mit dem Rotationsverdünner überführtes Gas wird über einen Strang der Wegführleitung über ein Drosselelement 13 abgeführt. Dem Drosselelement kann ein Filterelement 14 vorgeschaltet sein, damit das Drosselelement 13 nicht rasch verrusst. Andere Ausgestaltungen der Wegführungen sind selbstverständlich denkbar und je nach Spezifikation vorteilhaft; beispielsweise kann sich die Wegführleitung vor dem Rotationsverdünner verzeigen, wobei nur (kleinerer) Teil des russhaltigen Gases bspw. durch eine kleine Förderpumpe mit vorgeschaltetem Filter gefördert über einen Wegführleitungsstrang am Rotationsverdünner vorbeigeführt wird, während der anderer Teil des Gases über den anderen Wegführleitungsstrang durch Filter 14 und Drosselelement 13 abgeführt wird.

Der Brennraum, die Russwegführleitung, das sie umgebende Mantelrohr, die Wegführleitung (bis zum Rotationsverdünner bzw. dem Drosselelement) sowie die Zuführleitungen bilden zusammen einen Innenraum, welcher gegen aussen abgeschlossen ist. Für den Betrieb wird bspw. der Fluss der zugeführten Brenn-Oxidations- Lösch- und Verdünnungsgasmengen so eingestellt, dass die eine bezüglich der Menge des gebildeten Russes und der Laminarität der Strömung optimale Russbildung eintritt. Dann wird anhand zu einem früheren Zeitpunkt ermittelter Daten ein für die gewünschte Partikel-Grössenverteilung optimaler Betriebsdruck ausgewählt. Die durch das Drosselelement 13 abgeführte Gasmenge wird durch Regelmittel so geregelt, dass der gewünschte Betriebsdruck eintritt. Ein (nicht gezeichneter) Druckfühler im Innenraum liefert die dafür notwendigen Daten über den Druck. Die Steuerung der Russmenge erfolgt einerseits ggf. über das Verdünnungsverhältnis, andererseits über die Menge der mit dem Rotationsverdünner 11 übertragenen Gasmenge. Das Errechnen des optimalen Druckes und die Regelung desselben kann manuell, bspw. mit Hilfe einer Tabelle oder einer Kennlinie geschehen. Es ist aber auch möglich, die Ermittlung und/oder Steuerung des Druckes elektronisch, bspw. mit Hilfe eines Computers mit Benutzerinterface durchzuführen.

Es hat sich gezeigt, dass bei Kohlenwasserstoffgasen (bspw. Propan) als Brennstoff und getrockneter und gefilterter Umgebungsluft Luft als Oxidationsgas Partikel-Grössenverteilungen mit mittleren Partikelgrössen zwischen 30 nm und 250 nm erreichen lassen, wobei die Partikel umso grösser werden, je höher der Druck innerhalb des Brennraumes ist. Eine vergleichsweise moderate Druckerhöhung im 100 mbar kann schon ausreichen, um die mittlere Partikelgrösse von 50 nm auf 75 nm ansteigen zu lassen. Ausgangsseitig der Vorrichtung erreichte Partikelkonzentrationen betragen bspw. zwischen 10⁷ cm⁻³ und 10⁹ cm⁻³.

Anstelle des Rotationsverdünners können auch andere Einrichtungen zum Überführen von Gas vom Innenraum in eine vom Innenraum entkoppelte (Mess-) Leitung vorhanden sein. Die sehr schematische Illustration eines möglichen Prinzips findet man in Fig. 2. Das dort gezeichnete Verdünnungsgerät 20 besitzt zwischen dem Innenraum (Druck: pᵢ) und einem Aussenraum (Druck: pₐ) einen rotierenden Zylinder 21 mit einem innerhalb des Zylinders zwischen Anschlägen verschiebbaren Kolben 22. Jeweils nach Rotation des Zylinders um 180° wird der Kolben entlang des Zylinders von einem Anschlag zum anderen verschoben, wobei das im Zylinder befindliche Volumen auf der einen Seite ausgestossen wird und sich gleichzeitig auf der anderen Seite der Zylinder wieder mit russhaltigem Gas füllt. Wenn pᵢ> pₐ geschieht das Verschieben des Kolbens selbsttätig aufgrund der Druckdifferenz, andernfalls muss ein Antriebsmechanismus für den Kolben zur Verfügung gestellt werden. Die Kontrolle der übertragenen Menge erfolgt über die Rotationsgeschwindigkeit des Zylinders. Die Fachperson wird viele weitere Mechanismen kennen oder sich ausdenken können, welche den Transfer von einem Gasvolumen von einem Behälter in einen von diesem entkoppelten anderen Behälter ermöglicht.

Noch eine andere Ausführungsform sieht die Verwendung einer kritischen Düse oder eines Nadelventils (nicht gezeichnet) vor, mit welchem das partikelhaltige Gas mit hoher Geschwindigkeit nach draussen überführt wird. Auch die Verwendung einer kleinen Öffnung, bspw. die Öffnung einer Irisblende, durch die konstant partikelhaltiges Gas wegströmt, ist möglich.

In einem im Wesentlichen abgeschlossenen System stellt sich unter Umständen die Frage nach der Zündung der Flamme. Zwar sind Systeme zur automatischen, bspw. elektrisch betriebenen Zündung von Gasflammen an sich schon längst bekannt. Hier stellt sich aber das zusätzliche Problem, dass die Laminarität der Gasströmung in der Flamme, deren unmittelbaren Umgebung und überall sonst wo Verbrennungs- und Koagulationsprozesse oder andere die Russpartikeleigenschaften beeiflussende Prozesse stattfinden, gewährleistet sein muss. Es ist daher im Allgemeinen nicht möglich, eine übliche Zündkerze am Ort der Flamme zu plazieren, und Systeme gemäss dem Stand der Technik sehen daher von Einrichtungen zur elektrisch gesteuerten Zündung der Flamme ab.

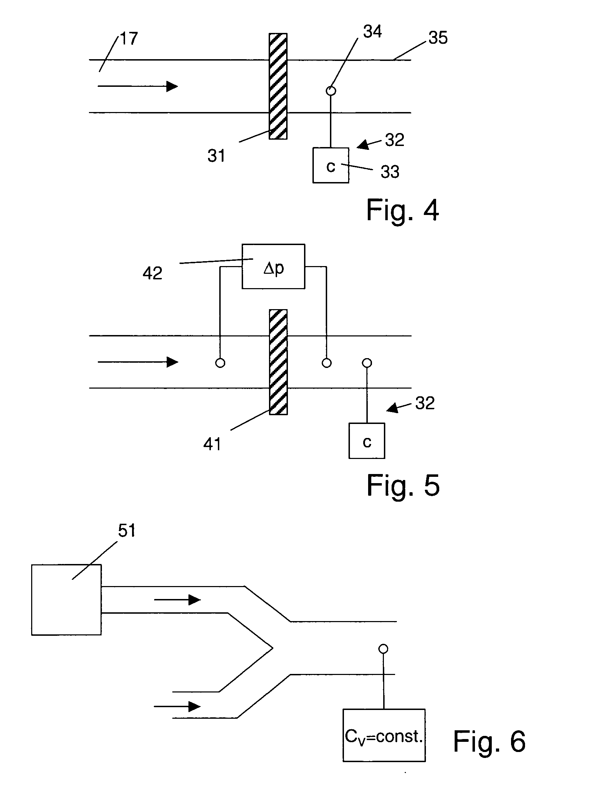

Gemäss einer Ausführungsform der Erfindung besitzt die Vorrichtung eine Anzündvorrichtung zum Anzünden der Flamme im geschlossenen Innenraum. Die Anzündvorrichtung ist vorzugsweise ausserhalb des Brennraums angeordnet. Vier Beispiele für mögliche Anordnungen sind in Fig. 3 eingezeichnet. Es versteht sich, dass in Realität im Allgemeinen nicht wie in Fig. 3 gezeichnet alle vier Anzündvorrichtungen vorhanden sind, sondern vorzugsweise genau eine davon.

Eine erste mögliche Anordnung einer Anzündvorrichtung 21.1 ist in der Brennstoff- oder der Oxidationsgaszuführleitung. Auch beim Ausgang der Russwegführleitung 3 - also dort, wo sich das russhaltige mit Löschgas vermischte Verbrennungsprodukt mit dem Verdünnungsgas vermischt, kann eine Anzündvorrichtung 21.2 angeordnet sein. Eine weitere mögliche Anordnung einer Anzündvorrichtung 21.3 ist innerhalb der Löschgaszuführung, stromaufwärts von der Mündung der Brennkammer 1. Die Anzündvorrichtung kann durch entsprechend vorgesehene Öffnungen von aussen in den Innenraum hineinragen, wie das in zwei Fällen (entsprechend Vorrichtungen 21.2 und 21.3) gezeichnet ist und sie kann gemäss dem Prinzip einer Zündkerze elektrisch betätigbar sein. Sie kann alternativ dazu auch auf einem katalytischen Prinzip basieren und bspw. eine katalytisch aktive grosse Platinoberfläche aufweisen.

In allen gezeichneten Fällen ist die Anzündvorrichtung von der Brennkammer weg und so angeordnet, dass im Bereich, in welchem Russpartikel entstehen und sich chemisch oder physikalisch (Koagulation) verändern können die laminare Strömung nicht beeinträchtigt ist. Trotzdem hat es sich gezeigt, dass ein Anzünden möglich ist, aufgrund der vor der Verbrennung entstehenden Diffusionsprozesse.

Alternativ zu den vorstehend beschriebenen Anordnungen kann auch eine mechanisch verschiebbare Anzündvorrichtung vorgesehen sein. Ein entsprechendes Beispiel ist die vierte gezeichnete Anzündvorrichtung 21.4. Diese Anzündvorrichtung 21.4 ragt durch eine Öffnung des Brennraums 1 in diesen hinein. Zum Anzünden wird sie in eine ungefähr der gezeichneten Lage entsprechenden Position geschoben. Anschliessend wird sie für einen störungsfreien Betrieb so weit zurückgezogen, dass die Strömungen im Brennraum 1 wieder laminar sind.

Fig. 4 zeigt eine Filter-Test- oder Kontrollanordnung, wie sie für die Qualitätskontrolle in der filterherstellenden Industrie verwendet werden kann. Der Ausgang 17 einer Vorrichtung der vorstehend beschriebenen Art wird mit Messstrecke mit Filter 31 verbunden. In Strömungsrichtung hinter dem Filter 31 ist eine Messanordnung 32 - hier eine Messapparatur 33 mit Messfühler 34 angebracht. Aufgrund des durch den Filter bewirkten Druckabfalls ist bei einem offenen Ausgang des Messrohres 35 der Druck höher als der Atmosphärendruck und bei sich änderndem Volumenstrom oder Filtereigenschaften nicht konstant. Das erfindungsgemässe Vorgehen erlaubt es trotzdem, Russ in einer bekannten, meist kleinen, reproduzierbaren Menge mit bekannten, reproduzierbaren Eigenschaften (Partikelgrösse und/oder -zusammensetzung) in die Anordnung zu injizieren. Die durch die Messanordnung detektierte Partikelmenge und die Partikeleigenschaften sind dann für die Filtereigenschaften kennzeichnend. Messanordnungen zur Bestimmung von Partikelmengen und -eigenschaften, beruhend auf der Messung der Mobilität oder auf optischen, photoelektrischen, gravimetrischen oder anderen Prinzipien sind an sich bekannt und werden hier nicht im Detail erläutert; es wird auf die umfangreiche Fachliteratur verwiesen.

Die Anordnung gemäss Fig. 5 dient der Filterprüfung, wie sie bspw. bei der Entwicklung von Filtern oder Filterelementen zum Einsatz kommt. Testfilter 41 werden einer ausgiebigen Prüfung unterworfen, wobei der Filter auch grösseren, aber immer reproduzierbaren Mengen an Russ ausgesetzt wird. Zusätzlich zu einer Messanordnung 32 für die Partikeleigenschaften ist auch ein Druckmessgerät 42 eingezeichnet, welches den Druckabfall über dem Testfilter 41 -in Funktion des Volumenstroms und u.U. der bisher herausgefilterten Russmenge - ermittelt. Der Volumenstrom durch den Testfilter kann im Verlauf des ganzen Prüfvorganges variiert werden, und kann bspw. vergleichsweise hohe Werte von bis zu 1.5 m³/min oder mehr betragen. Der durch das Verdünnungsgerät - in dieser Ausführungsform vorzugsweise eine kritische Düse, ein Nadelventil oder eine Irisblende - diesem beigemischte Volumenstrom an russhaltigem Gas beträgt bspw. variierbar zwischen 0 und 30 l/min. Der Gesamtvolumenstrom - regelbar durch Steuerung der Trägergasmenge in der Messleitung 12 - und die Russmenge können also unabhängig voneinander eingestellt werden; ebenso kann unabhängig von den beiden Volumenströmen die Grössenverteilung der Russpartikel gesteuert werden. Dies alles wird möglich aufgrund der erfindungsgemässen pneumatischen Entkopplung des Russerzeuger-Innenraums.

Die erfindungsgemässe Vorrichtung lässt sich auch, nach einer Skalierung hin zu grösseren Dimensionen und grösserer Leistung, für die Kalibrierung von ganzen Anlagen - im Ggs. zu einzelnen Messaparaturen - bspw. von sog. ,Constant Volume Samplers' (CVS) verwenden. CVS-Anlagen kommen zur Anwendung bei der Prüfung von Emissionseigenschaften von Verbrennungsmotoren in Abgängigkeit von der Belastung. Mit ihnen wird die Partikelemission in Abhängigkeit der Motorenleistung, also bspw. der gefahrenen Kilometer oder der geleisteten Kilowattstunden bestimmt. In einem CVS wird ein variierender partikelhaltiger Abgasstrom mit so mit Verdünnungsgas versetzt, dass der resultierende Volumenstrom konstant ist. Die Partikelkonzentration im Volumenstrom ist dann ein Mass für die Gesamtpartikelemissionsmenge.

Gemäss einem Aspekt der Erfindung wird eine erfindungsgemässe Vorrichtung zum Erzeugen von Russ mit Brennraum und darin befindlicher, Russ erzeugender Flamme anstelle des Verbrennungsmotors oder eines Fahrzeuges mit Verbrennungsmotor mit dem Eingang einer solchen Anlage verbunden. Der erfindungsgemässe Ansatz erlaubt bei einer konstant brennenden Flamme einer - entsprechend gross dimensionierten - Vorrichtung 51 der erfindungsgemässen Art einen in Partikelmenge und ggf. -konzentration variierenden Gasstrom zu erzeugen, wobei die Partikelgrössenverteilung unabhängig von der Menge ist. Wenn man die Emission eines Verbrennungsmotors simulieren möchte, ist es unter Umständen notwendig, den russhaltigen Gasstrom mit Druck in die Anlage zu injizieren, wie das auch durch einen unter Last stehenden Verbrennungsmotor geschieht. Auch dies ist nur möglich durch die erfindungsgemässe Entkopplung von Vorrichtungsinnenraum und Umgebung.

Die Verwendung eines Russerzeugers mit Flamme zum Kalibrieren oder Testen von Grossanlagen für die Emissionsmessung ist ein weiterer durch die Erfindung neu hinzugekommener Aspekt.

Die vorstehend beschriebenen Ausführungsformen der Erfindung sind blosse Beispiele und können in mancher Hinsicht abgeändert werden. So ist bspw. die Form des Brenners keineswegs auf die gezeichnete Form beschränkt. Zwar ist eine T-förmige Anordnung mit vertikalem Brennraum und horizontaler Russwegführung in mancher Hinsicht vorteilhaft aber keineswegs notwendig. Auch vollständig vertikale Anordnungen mit einem Brennraum, der direkt in eine ebenfalls horizontal verlaufende Russwegführung übergeht, sind denkbar. Wie bereits erwähnt sind auch für das Verdünnungsgerät bzw. allgemein das Mittel zum Überführen geregelter Mengen russhaltigen Gases nach draussen viele verschiedene Lösungen denkbar. Wesentlich ist lediglich der von der Umwelt abgekoppelte Brennraum.

Weiter können nebst dem Druck oder anstelle des Drucks zusätzliche Regelungsparameter zu Einstellung gewünschter Partikelverteilungen verwendet werden, bspw. ein Brenngasgemisch oder dessen Verdünnung mit Inertgas, das Verhältnis Brenngas/Oxidationsgas oder andere. Die Einstellung des Drucks muss nicht notwendigerweise (allein) durch ein Drosselelement 13 geschehen sondern kann ebenfalls anders erfolgen, bspw. über die Menge des zugeführten Löschgases etc.

## Patentansprüche

1. Vorrichtung zum Erzeugen von Russ mit definierten Eigenschaften für Mess- oder Kalibrierungszwecke, mit einem Brennraum (1), zu welchem Brennstoff und Oxidationsgas zuführbar sind und in welchem eine Russpartikel erzeugende, vom Brennstoff und vom Oxidationsgas genährte Flamme gebildet werden kann, und mit einer mit dem Brennraum gekoppelten Russwegführung (3), wobei der Russwegführung ein Löschgas zuführbar ist, **dadurch gekennzeichnet, dass** ein den Brennraum und die Russwegführung umfassender Innenraum vorhanden und so von der Umgebung entkoppelt ist, dass der Innenraum mit einem vom Atmosphärendruck verschiedenen Druck beaufschlagbar ist.

2. Vorrichtung nach Anspruch 1, **gekennzeichnet durch** ein Verdünnungsgerät (11, 20) zum Überführen von definierten Gasvolumina aus dem Innenraum in einen Aussenraum.

3. Vorrichtung nach Anspruch 2, **dadurch gekennzeichnet, dass** das Verdünnungsgerät ein Karussell-Verdünner (11) ist.

4. Vorrichtung nach Anspruch 1, **gekennzeichnet durch** eine kritische Düse, ein Nadelventil oder eine Irisblende zum Überführen von definierten Gasvolumina aus dem Innenraum in einen Aussenraum.

5. Vorrichtung nach einem der vorangehenden Ansprüche, **gekennzeichnet durch** Regelmittel zum Einstellen eines geregelten Innendrucks.

6. Vorrichtung nach einem der vorangehenden Ansprüche, **gekennzeichnet durch** eine Anzündvorrichtung (21.1, 21.2, 21.3) zum Anzünden der Flamme im Innenraum.

7. Vorrichtung nach Anspruch 6, **dadurch gekennzeichnet, dass** die Anzündvorrichtung ausserhalb des Brennraumes in der Russwegführung, der Löschgaszuführung oder in der Brenngas- und/oder Oxidationsgaszuführung angeordnet ist.

8. Verfahren zum Erzeugen von Russ mit definierten Eigenschaften für Mess- oder Kalibrierungszwecke, wobei einem Brennraum (1) Brennstoff und Oxidationsgas zugeführt werden und durch eine Diffusionsflamme Russpartikel erzeugt werden, wobei die erzeugten Russpartikel in eine mit dem Brennraum gekoppelte Russwegführung (3) geführt werden und wobei der Russwegführung ein Löschgas zugeführt wird, **dadurch gekennzeichnet, dass** ein der Brennraum und die Russwegführung umfassender und von der Umgebung entkoppelter Innenraum mit einem vom Atmosphärendruck verschiedenen Druck beaufschlagt wird, und dass dieser Druck geregelt wird.

9. Verfahren zum Testen von Filtern oder Filterelementen wobei mit einem Verfahren nach Anspruch 8 ein Russ enthaltendes Gas erzeugt und einem Gasstrom beigemischt wird und dieser durch den zu testenden Filter oder das zu testende Filterelement geführt wird.

10. Verfahren nach Anspruch 9, **dadurch gekennzeichnet, dass** in Strömungsrichtung hinter dem Filter bzw. dem Filterelement die Russkonzentration im Gas gemessen wird.

11. Verfahren nach Anspruch 8 oder 9, **dadurch gekennzeichnet, dass** der durch den Filter bzw. das Filterelement erzeugte Druckabfall im Gasstrom gemessen wird.

12. Verwendung einer Vorrichtung zum Erzeugen von Russ mit definierten Eigenschaften für Mess- oder Kalibrierungszwecke, mit einem von der Umwelt entkoppelten Brennraum (1), zu welchem Brennstoff und Oxidationsgas zuführbar sind und in welchem eine Russpartikel erzeugende, vom Brennstoff und vom Oxidationsgas genährte Flamme gebildet werden kann, und mit einer mit dem Brennraum gekoppelten Russwegführung (3), wobei der Russwegführung ein Löschgas zuführbar ist, zum Testen von Filterelementen (31, 41) oder zum Kalibrieren von Konstant-Volumenstrom-Messapparaturen.
